# EUROPÄISCHE PATENTSCHRIFT

(11) **EP 2 563 554 B1**
(45) Veröffentlichungstag und Bekanntmachung des Hinweises auf die Patenterteilung: **23.03.2022**
(21) Anmeldenummer: 11717952.3
(22) Anmeldetag: 27.04.2011
(51) Int. Cl.: B25J 15/00

(54) **VORRICHTUNG UND VERFAHREN ZUR HANDHABUNG VON VORZUGSWEISE ZU BESCHICHTENDEN BAUTEILEN**
DEVICE AND METHOD FOR HANDLING COMPONENTS, PREFERABLY COMPONENTS TO BE COATED
DISPOSITIF ET PROCÉDÉ DE MANIPULATION D'ÉLÉMENTS DESTINÉS DE PRÉFÉRENCE À ÊTRE REVÊTUS

(30) Priorität: 27.04.2010 DE 102010018468
(43) Veröffentlichungstag der Anmeldung: 06.03.2013
(73) Patentinhaber: Dürr Systems AG, 74321 Bietigheim-Bissingen (DE)
(72) Erfinder: BUCKNELL, Thomas, A., White Lake, MI 48383 (US)
(74) Vertreter: Beier, Ralph
(86) Internationale Anmeldenummer: PCT/EP2011/002116
(87) Internationale Veröffentlichungsnummer: WO 2011/134654

(56) Entgegenhaltungen:
- DE-A1-102006 050 114
- JP-A- H04 115 892
- JP-A- 2002 210 689
- JP-A- 2004 255 527
- US-A- 4 273 505
- US-A- 5 090 758
- US-B1- 6 484 601
- US-B1- 6 846 029

## Beschreibung

Die Erfindung betrifft eine Vorrichtung und ein Verfahren zur Handhabung von vorzugsweise zu beschichtenden Bauteilen, nämlich Hauben, Türen, Klappen oder dergleichen von Kraftfahrzeugkarosserien oder anderen Fahrzeugen.

In Beschichtungs-/Lackieranlagen verwendete Vorrichtungen zur Handhabung von zu beschichtenden Bauteilen, wie z.B. Hauben, Türen, Klappen oder dergleichen von Kraftfahrzeugkarosserien, umfassen gemäß Stand der Technik meist Haken, Stifte oder Magnete, die mit dem zu beschichtenden Bauteil in Eingriff gebracht werden. Die Vorrichtungen werden oftmals von Handhabungsrobotern geführt, um die zu beschichtenden Bauteile insbesondere zu öffnen, zu halten und/oder zu schließen, wodurch z.B. eine allseitige Beschichtung der Kraftfahrzeugkarosserien ermöglicht wird.

Um einen sicheren Eingriff zwischen Haken, Stiften und dem zu beschichtenden Bauteil gewährleisten zu können, müssen die Haken und Stifte auf Erfassungsstrukturen am zu beschichtenden Bauteil abgestimmt sein. Dabei ist zunächst problematisch, dass die zu beschichtenden Bauteile in der Regel nur wenige bis keine geeigneten Erfassungsstrukturen zum Erfassen mit Haken oder Stiften aufweisen, und selbst wenn geeignete Erfassungsstrukturen vorhanden sein sollten, diese in Abhängigkeit der unterschiedlichen zu beschichtenden Bauteile variieren. So Bedarf es nachteilig einer Vielzahl unterschiedlicher Haken oder Stifte, um eine Vielzahl unterschiedlicher zu beschichtender Bauteile handhaben zu können. Die Toleranzen im Rohbau, also an der Karosse, sind erheblich, weshalb das Greifen mit den bekannten Elementen problematisch ist.

Es ist bekannt, an den zu beschichtenden Bauteilen eine oder mehrere wieder-entfernbare Erfassungsstrukturen zu befestigen, mit denen die Haken oder die Stifte in Eingriff gebracht werden können. Diese wieder-entfernbaren Erfassungsstrukturen sind so gestaltet, dass sie von den Haken oder Stiften sicher ergriffen werden können. Nachteilig ist jedoch, dass die wieder-entfernbaren Erfassungsstrukturen durch einen Werker montiert und wieder demontiert werden müssen, was zeitaufwendig und kostspielig ist. Darüber hinaus müssen derartige wieder-entfernbare Erfassungsstrukturen gesäubert werden, da sie in exponierter Lage am zu beschichtenden Bauteil montiert und deshalb von Beschichtungsmittel (z.B. Overspray) verschmutzt werden können, was zeitaufwendig und kostspielig ist. Ferner müssen die Eingriffsstrukturen gelagert werden, was ebenfalls als nachteilig empfunden wird.

Ferner sind die Haken und Stifte gemäß Stand der Technik meist im Wesentlichen starre Teile, die bei einem unerwünschten Zusammentreffen mit einem zu beschichtenden Bauteil das Bauteil (z.B. Deformationen, Materialabtrag oder andere unerwünschte Veränderungen), sich selbst oder den den Haken oder den Stift führenden Roboter beschädigen können.

Auch kann es vorkommen, dass z.B. zu öffnende Hauben oder Türen verklemmt sind. Wenn ein starrer Haken oder Stift gemäß Stand der Technik eine verklemmte Haube oder Türe öffnen möchte, kann es ebenfalls zu Beschädigungen des Hakens oder Stifts, aber auch zu Beschädigungen des zu beschichtenden Bauteils (z.B. durch wegbrechende Teile) oder des den Haken oder den Stift führenden Roboters kommen.

Für einen sicheren Handhabungs-/Beschichtungsvorgang ist wesentlich, dass festgestellt werden kann, ob ein zu beschichtendes bzw. zu handhabendes Bauteil präsent ist, insbesondere, ob das Bauteil von dem Haken oder dem Stift erfasst ist oder nicht. Die Feststellung, ob ein zu beschichtendes Bauteil von dem Haken oder dem Stift erfasst wird oder nicht, erfolgt gemäß Stand der Technik meist über elektrische Signale, die eigensicher sein müssen (z.B. sind Lackierkabinen meist als explosionsgefährdete Bereiche definiert) und die an eine speicherprogrammierbare Steuerung (PLC) oder eine Steuerung eines Roboters, der den Haken oder Stift führt, kommuniziert werden, was eine aufwendige Technik (z.B. Schalter, Sensoren, etc.) erfordert und nachteilig die Komplexität und die Kosten des Systems steigert.

Weiterhin ist eine wichtige, von bekannten Greifersystemen oft nicht gewährleistete Anforderung, dass keine zu lackierenden Flächen berührt oder abgedeckt werden dürfen, da dies zu Fehlbeschichtungen führen kann.

Vorrichtungen zur Handhabung von Bauteilen mit durch Fluidbeaufschlagung volumen- und/oder formveränderbaren Elementen zur Erfassung der Bauteile sind bekannt aus JP H04-115892 A, US 6 484 601 B1 und US 6 846 029 B1.

DE 10 2006 050 114 A1 offenbart eine Positionierungsvorrichtung mit einer Hakenhalterung aus zwei Armen.

Die Dokumente US 4 273 505 A, DE 33 10 192 C2, US 2004/0186626 A1 und US 4 783 108 A beschreiben weiteren allgemeinen Stand der Technik.

In Anbetracht obiger Ausführungen wird es Fachleuten anhand dieser Offenbarung ersichtlich, dass ein Bedarf an der Lösung oder Überwindung oben beschriebener Probleme oder Nachteile besteht. Diese Erfindung bezieht sich auf diesen Bedarf des Standes der Technik sowie auf andere Bedürfnisse, die Fachleuten anhand dieser Offenbarung ersichtlich werden.

Die sich aus vorstehend Genanntem ergebenden Aufgaben können mit den Merkmalen des unabhängigen Anspruchs gelöst werden.

Insbesondere ist die Vorrichtung vorzugsweise vorgesehen, um von einem (Handhabungs-) Roboter, Lackierroboter oder Manipulator geführt zu werden, z.B. so, dass eine Haube, Klappe und/oder Türe einer Kraftfahrzeugkarosserie geöffnet, gehalten und/oder geschlossen werden kann.

Die Vorrichtung findet besonders vorteilhaft Anwendung in einer Beschichtungs-/Lackieranlage für Kraftfahrzeugkarosserien und Anbauteile von Kraftfahrzeugkarosserien.

Die Handhabungsvorrichtung umfasst ein Erfassungselement bzw. Greifelement, das volumenveränderbar und/oder formveränderbar ist, um das Bauteil zu erfassen, wodurch das Bauteil gehandhabt werden kann.

Das Erfassungselement ist ferner volumenveränderbar und/oder formveränderbar, um die Erfassung des Bauteils zu lösen, insbesondere nach erfolgter Handhabung des Bauteils.

Da das Erfassungselement volumenveränderbar und/oder formveränderbar ist, kann das Erfassungselement bei einer Vielzahl von unterschiedlichen, an den Bauteilen befindlichen Erfassungsabschnitten (z.B. Erfassungsabschnitte mit unterschiedlicher Größenordnung oder unterschiedlicher Geometrie) verwendet werden. Bevorzugte Erfassungsabschnitte sind z.B. die Innenkonturen von Öffnungen in dem Bauteil (insbesondere kleine Öffnungen z.B. Grifföffnungen, Schlossöffnungen, wie Öffnungen für Türschlösser, Haubenschlösser und/oder Kofferraum-/Heckklappenschlösser oder ähnliche Öffnungen) oder benachbarte Abschnitte der Öffnungen.

Ferner kann sich das Erfassungselement aufgrund der Volumenveränderbarkeit und/oder Formveränderbarkeit vorzugsweise sanft und geschmeidig an die (unterschiedlichen) Erfassungsabschnitte anpassen, was die Gefahr der Beschädigung des Erfassungsabschnitts bzw. des Bauteils minimiert oder beseitigt.

Vorteilhaft ist weiter, dass das Erfassungselement in der Lage ist, das Bauteil an nicht exponierten Abschnitten, z.B. nicht zu beschichtenden Abschnitten einer Kraftfahrzeugkarosserie zu erfassen (z.B. an der Innenkontur einer Öffnung des Bauteils oder sogar gänzlich hinter der Öffnung bzw. in einem Hohlraum des Bauteils), wodurch die zu beschichtende Fläche des Bauteils durch das Erfassungselement nicht bedeckt oder beeinträchtigt wird.

Ferner kann mittels der Volumenveränderbarkeit und/oder der Formveränderbarkeit vorteilhaft auf einfache Art und Weise eine betriebssichere Vorrichtung zur Handhabung von vorzugsweise zu beschichtenden Bauteilen bzw. ein betriebssicheres Erfassungselement vorgesehen werden. Die Betriebssicherheit gewährleistet, dass selbst im Fehlerfall kein unsicherer Zustand auftritt und/oder die Gefahr einer Beschädigung des Bauteils, des Erfassungselements und/oder des das Erfassungselement führenden Roboters zumindest minimiert, vorzugsweise ausgeschlossen wird.

Die Betriebssicherheit kann z.B. gewährleistet werden, indem das Erfassungselement bei Überbelastung (z.B. eine verklemmte zu handhabende Türe oder Haube) aufgrund der Volumenveränderbarkeit und/oder der Formveränderbarkeit so nachgibt, dass die Erfassung zwischen Erfassungselement und Bauteil gelöst wird, oder indem die Reißfestigkeit des Erfassungselements so gewählt wird, dass das Erfassungselement reißt, wodurch zumindest die Gefahr einer Beschädigung des Bauteils und des das Erfassungselement führenden Roboters minimiert oder verhindert werden kann.

Das Erfassungselement kann einen formvergrößerten und/oder volumenvergrößerten und/oder expandierten und/oder aufgeblähten und/oder innendruckbeaufschlagten und/oder aufgeblasenen Zustand umfassen (nachfolgend der Kürze wegen als "expandierter Zustand" bezeichnet). Ferner kann das Erfassungselement einen formverkleinerten und/oder volumenverkleinerten und/ oder im Wesentlichen de-expandierten und/oder de-aufgeblähten und/oder entspannten und/oder schlaffen Zustand umfassen (nachfolgend der Kürze wegen als "im Wesentlichen de-expandierter Zustand" bezeichnet). Der im Wesentlichen de-expandierte Zustand kann vorzugsweise auch Zustände umfassen, bei denen das Erfassungselement zwar expandiert ist (z.B. druck- bzw. fluidbeaufschlagt ist), jedoch auf eine Dimension, bei der keine Erfassung des Bauteils erfolgt.

Das Erfassungselement ist durch Fluidzufuhr und/oder Fluidentfernung (z.B. Fluidentnahme bzw. Ablassen von Fluid) formveränderbar und/oder volumenveränderbar. Ferner ist das Erfassungselement vorzugsweise durch Druckerhöhung (z.B. auf einen Druck, der höher ist als der Atmosphärendruck) und/oder durch Druckreduzierung (z.B. auf im Wesentlichen den Atmosphärendruck oder einen Druck, der das Erfassungselement in einer Form und/oder Ausrichtung hält, mit der das Erfassungselement zielgenau in und/oder durch eine Öffnung in dem Bauteil geführt werden kann, und/oder mit der das Erfassungselement wieder sicher aus der Öffnung herausgeführt werden kann) formveränderbar und/oder volumenveränderbar. Eine Fluidzufuhr bzw. eine Druckerhöhung führt bevorzugt dazu, dass das Erfassungselement expandiert bzw. sich vergrößert und/oder das Bauteil erfasst wird, wobei ein Fluidentzug bzw. eine Druckreduzierung bevorzugt dazu führt, dass das Erfassungselement de-expandiert bzw. sich verkleinert und/oder die Erfassung des Bauteils gelöst wird.

Insbesondere ist es möglich, dem Erfassungselement ein Fluid zuzuführen, um den Innendruck des Erfassungselements relativ zum Atmosphärendruck zu erhöhen und/oder um das Erfassungselement und/oder das Volumen und/oder die Form des Erfassungselements zu vergrößern (bzw. in einen expandierten Zustand zu bringen), wodurch vorzugsweise das Bauteil erfasst werden kann.

Es ist auch möglich, dass Fluid aus dem Erfassungselement entfernt wird, um den Innendruck des Erfassungselements z.B. auf im Wesentlichen Atmosphärendruck zu reduzieren und/oder um das Erfassungselement und/oder das Volumen und/oder die Form des Erfassungselements zu verkleinern (bzw. in den im Wesentlichen de-expandierten Zustand zu bringen), wodurch vorzugsweise die Erfassung des Bauteils gelöst werden kann.

Die Vorrichtung kann z.B. eine Einrichtung zur Fluidzufuhr und/oder Fluidentfernung (z.B. Fluidentnahme bzw. Ablassen von Fluid) umfassen oder ausgebildet sein, um mit einer solchen Einrichtung verbindbar zu sein.

Das Vergrößern bzw. das Expandieren des Erfassungselements und/oder des Volumens und/oder der Form des Erfassungselements erfolgt vorzugsweise durch axiale Verlängerung und/oder Umfangsvergrößerung bzw. Vergrößerung in radialer Richtung, wohingegen das Verkleinern bzw. die De-Expansion des Erfassungselements und/oder des Volumens und/oder der Form des Erfassungselements entsprechend durch axiale Verkürzung und/oder durch Umfangsverkleinerung bzw. Verkleinerung in radialer Richtung erfolgt.

Das Erfassungselement ist vorzugsweise vorgesehen, um (in dem im Wesentlichen de-expandierten Zustand) in und/oder durch eine Öffnung in dem Bauteil geführt zu werden, insbesondere um in und/oder hinter und/oder vor der Öffnung formverändert und/oder volumenverändert zu werden (bzw. in einen expandierten Zustand gebracht zu werden), wodurch das Bauteil erfasst werden kann.

Es ist sogar möglich, dass das Erfassungselement im Wesentlichen gänzlich hinter der Öffnung im Bauteil in den expandierten Zustand gebracht wird, wodurch das Erfassungselement z.B. während des Beschichtungsvorgangs einerseits vorteilhaft in einer verschmutzungssicheren Position angeordnet ist und anderseits vorteilhaft die zu beschichtenden Flächen des Bauteils nicht bedeckt oder beeinträchtigt.

Insbesondere ist das Erfassungselement vorgesehen, um in einem expandierten Zustand gegen das Bauteil, insbesondere gegen die Innenkontur der Öffnung des Bauteils gedrückt zu werden, um einen Formschluss, einen Kraftschluss und/oder einen Reibschluss mit dem Bauteil auszubilden. Ferner ist das Erfassungselement insbesondere vorgesehen, um in einem im Wesentlichen de-expandierten Zustand die Druckbeaufschlagung auf das Bauteil, insbesondere die Innenkontur der Öffnung des Bauteils zu lösen, um den Formschluss, den Kraftschluss, und/oder den Reibschluss mit dem Bauteil zu lösen.

Das Erfassungselement ist vorgesehen, um sich der Innenkontur einer Öffnung im Bauteil zumindest abschnittsweise oder vollumfänglich anzupassen. Beispielsweise kann das Erfassungselement in einem expandierten Zustand die Öffnung in dem Bauteil vorzugsweise vollständig ausfüllen bzw. schließen und/oder die Innenkontur der Öffnung oder die benachbarten Abschnitte der Öffnung vorzugsweise vollumfänglich kontaktieren, wodurch vorteilhaft eine große Kontaktfläche zwischen Erfassungselement und Bauteil erzielt werden kann. Dies erzeugt eine bessere Spannungsverteilung gegenüber einer im Wesentlichen punktförmigen Erfassung eines Hakens oder eines Stifts gemäß Stand der Technik.

Das Erfassungselement kann zumindest eines von Folgenden sein: dehnbar, nicht-dehnbar, flexibel, elastisch, nachgiebig, fluiddicht, ballonartig, aufblasbar, folienartig, membranartig (z.B. aus einer Folie oder einer Membran hergestellt), ein Hohlkörper, ballonartig formveränderbar, ballonartig volumenveränderbar, reversibel form- und/oder volumenveränderbar, insbesondere expandierbar, und memoryeffektbehaftet (z.B. aus einem Werkstoff/Material ausgebildet, das einen Memory- bzw. Formgedächtnis-Effekt aufweist).

Bevorzugt ist das Erfassungselement aus einem Kunststoff hergestellt und insbesondere aus einem thermoplastischen Polyurethan. Ein Beispiel für einen besonders geeigneten Kunststoff ist das unter dem Handelsnamen Desmopan^{®} bekannte Material von Bayer, das in dem Dokument "Desmopan^{®} - Typenübersicht - Richtwerte, Ausgabe 10.2008" beschrieben ist, dessen gesamter Inhalt der vorliegenden Offenbarung zuzurechnen ist.

Die Vorrichtung kann ferner ein Stützteil umfassen, das das Erfassungselement in einer bestimmten Form und/oder einer Ausrichtung hält, z.B. um das Erfassungselement zielgenau in und/oder durch eine Öffnung in dem Bauteil zu führen, und/oder um das Erfassungselement sicher aus der Öffnung heraus zu führen. Das Erfassungselement kann auch einen Memory- bzw. Formgedächtnis-Effekt aufweisen, um das Erfassungselement in einer bestimmten Form und/oder Ausrichtung zu halten, in der es z.B. zielgenau in und/oder durch eine Öffnung in dem Bauteil geführt werden kann und/oder in der es z.B. sicher aus der Öffnung heraus geführt werden kann. Somit kann vorteilhaft gewährleistet werden, dass das Erfassungselement im im Wesentlichen de-expandierten Zustand sicher durch und/oder in die Öffnung hinein und wieder heraus geführt werden kann.

Vorzugsweise ist das Stützteil in dem Erfassungselement angeordnet und flexibel, elastisch und/oder nachgiebig ausgebildet, insbesondere ausgebildet als Feder. Vorzugsweise ist das Stützteil von dem Erfassungselement umgeben bzw. in dem Erfassungselement bzw. dessen Volumen untergebracht.

Das Erfassungselement kann aus einer einzigen fluid- und/oder druckbeaufschlagbaren Kammer bestehen oder in mehrere Kammern unterteilt sein. Die mehreren fluid- und/oder druckbeaufschlagbaren Kammern können sequenziell und/oder parallel mit Fluid und/oder Druck beaufschlagbar sein.

Die Vorrichtung kann ferner eine Sollbruchstelle umfassen, die z.B. bricht, wenn das Bauteil bei der Handhabung klemmt. Es ist auch möglich, dass das Erfassungselement ein Befestigungsmittel zur Verbindung mit einer Befestigungsstruktur der Vorrichtung umfasst, wobei sich die Verbindung z.B. vorzugsweise ohne Beschädigung löst, wenn das Bauteil bei der Handhabung klemmt. Ferner kann die Reißfestigkeit des Erfassungselements so gewählt werden, dass das Erfassungselement reißt, wenn das Bauteil bei der Handhabung klemmt. Zwar wird im letztgenannten Fall das Erfassungselement beschädigt, jedoch nicht das zu beschichtende Bauteil oder der das Erfassungselement führende Roboter.

Vorzugsweise umfasst die Handhabungsvorrichtung einen Fluid-Zuführ/Abführ-Kanal zum Zuführen und/oder Abführen eines Fluids, wobei der Fluid-Zuführ/Abführ-Kanal in dem Erfassungselement und/oder dem Volumen mündet.

Ferner weist das Erfassungselement vorzugsweise zumindest eine Fluid-Zuführ/Abführ-Öffnung auf, die beispielsweise mit dem Fluid-Zuführ/Abführ-Kanal verbunden sein kann.

Ferner kann die Vorrichtung eine Schnittstelle zum Verbinden mit einem Roboter und/oder eine Schnittstelle zum Verbinden mit einer Einrichtung zur Fluidzufuhr und/oder Fluidentfernung umfassen.

Die Vorrichtung hat ferner eine Einrichtung zum Überwachen verschiedener Betriebszustände bzw. Betriebsvorgänge des Erfassungselements und/oder des Bauteils (z.B. Fehlerfassungen, ein nicht Vorhandensein eines Bauteils, insbesondere "Bauteil nicht erfasst", oder andere fehlerhafte Zustände oder Vorgänge, wie z.B. eine zu starke Kraft-, Druckoder Spannungsbeaufschlagung des Erfassungselements auf das Bauteil oder ein klemmendes Bauteil, aber auch z.B. ordnungsgemäße Erfassungen zwischen Erfassungselement und Bauteil, insbesondere "Bauteil erfasst", basierend auf zumindest einem Fluiddruck und zumindest einem Fluidvolumen, mit denen das Erfassungselement beaufschlagt wird. Die Betriebszustände bzw. Betriebsvorgänge können z.B. die Kraft, die Spannung oder den Druck umfassen, mit der bzw. dem das Erfassungselement das Bauteil erfasst bzw. beaufschlagt. Dies ist vorteilhaft, weil z.B. eine zu große Kraft, Spannung oder ein zu großer Druck das Bauteil beschädigen könnte.

Die Vorrichtung kann deshalb vorzugsweise vorgesehen werden, das Fluidvolumen und/oder den Fluiddruck, mit denen das Erfassungselement beaufschlagt wird, in Abhängigkeit z.B. einer oder mehrerer vorstehend genannter Betriebszustände bzw. Betriebsvorgänge (z.B. auch während der Handhabung) zu steuern (bzw. zu regeln) bzw. zu ändern. So kann beispielsweise die Kraft-, die Spannungs- und/oder die Druckbeaufschlagung des Erfassungselements auf das Bauteil überwacht und gesteuert werden, insbesondere begrenzt werden, um eine Beschädigung des Bauteils, möglicherweise auch des Erfassungselements zu vermeiden.

Beispielsweise kann die Vorrichtung, insbesondere die Einrichtung zum Erfassen und/oder Ermitteln und/oder Feststellen verschiedener Betriebszustände bzw. Betriebsvorgänge des Erfassungselements und/oder des Bauteils einen oder mehrere Sensoren (z.B. Kraftsensoren, Drucksensoren, Volumensensoren, etc.) aufweisen.

Vorteilhaft ist, dass Betriebszustände bzw. Betriebsvorgänge des Erfassungselements und/oder des Bauteils anhand von Werten bzw. Größen festgestellt, überwacht bzw. ermittelt werden können, die bereits aus der Steuerung der Vorrichtung bekannt sind und/oder problemlos daraus ermittelt werden können, ohne das Erfordernis zusätzlicher mechanischer oder elektrischer

Komponenten, wie z.B. weitere Schalter, Sensoren, etc..

Die Einrichtung weist eine erste Erfassungseinheit auf, die vorgesehen ist, um einen Fluiddruck oder mehrere Fluiddrücke, mit denen das Erfassungselement beaufschlagt wird (zuführen und/oder abführen), zu erfassen und/oder zu ermitteln.

Die Einrichtung weist eine zweite Erfassungseinheit auf, die vorgesehen ist, um ein Fluidvolumen oder mehrere Fluidvolumina (Fluidmengen), mit denen das Erfassungselement beaufschlagt wird (zuführen und/oder abführen), zu erfassen und/oder zu ermitteln.

Es ist möglich, dass das Fluidvolumen oder die Fluidvolumina, mit denen das Erfassungselement beaufschlagt wird, stets im Wesentlichen gleich groß sind, da sie z.B. aus einem oder mehreren Dosierorganen mit jeweils einem bestimmten konstanten Volumen stammen, weshalb vorzugsweise keine Volumen- bzw. Volumenstrommessung erforderlich wird.

Ferner weist die Einrichtung eine Ermittlungseinheit auf, um eine oder mehrere Fluiddruck/Fluidvolumen-Kurven basierend auf dem zumindest einen erfassten Fluiddruck und dem zumindest einen erfassten Fluidvolumen und/oder basierend auf dem zumindest einen Fluiddruck und dem zumindest einen Fluidvolumen, mit denen das Erfassungselement beaufschlagt wird, zu ermitteln und/oder zu erzeugen.

Auch umfasst die Einrichtung eine Vergleichseinheit, um zumindest eine ermittelte und/oder erzeugte Fluiddruck/Fluidvolumen-Kurve mit zumindest einer in einem Speicher gespeicherten Referenz-Fluiddruck/Fluidvolumen-Kurve zu vergleichen, wodurch z.B. festgestellt werden kann, ob ein Bauteil erfasst wird oder nicht (ob ein Bauteil ordnungsgemäß präsent ist oder nicht), ob ein Bauteil klemmt oder nicht, und ob ein Bauteil ordnungsgemäß oder fehlerhaft gehandhabt wird.

Die Referenz-Fluiddruck/Fluidvolumen-Kurven können z.B. typische fehlerhafte Zustände oder Vorgänge beschreiben, aber auch ordnungsgemäße Zustände oder Vorgänge, und z.B. auf unterschiedliche Bauteile oder Erfassungsabschnitte abgestimmt sein. Die Referenz-Fluiddruck/Fluidvolumen-Kurven können durch einfache Versuche ermittelt werden.

Entspricht die ermittelte und/oder erzeugte Fluiddruck/Fluidvolumen-Kurve nicht einer Referenz-Fluiddruck/ Fluidvolumen-Kurve, die einen ordnungsgemäßen Vorgang oder Zustand beschreibt, so kann die Feststellung getroffen werden, dass allgemein ein fehlerhafter Zustand oder Vorgang vorliegt.

Entspricht die ermittelte und/oder erzeugte Fluiddruck/Fluidvolumen-Kurve im Wesentlichen einer Referenz-Fluiddruck/Fluidvolumen-Kurve, kann die Feststellung getroffen werden, dass ein ordnungsgemäßer Vorgang oder Zustand vorliegt oder dass ein bestimmter fehlerhafter Zustand oder Vorgang vorliegt.

Ferner betrifft die Erfindung einen Manipulator bzw. (Roboter (insbesondere einen Lackier- und/oder Handhabungsroboter), vorzugsweise einen Scara-Roboter (Englisch: "Selective Compliance Assembly Robot Arm") oder einen Roboter mit bis zu 7 Freiheitsgraden, der eine Handhabungsvorrichtung wie oben beschrieben aufweist.

Aus WO 2010/025827 A1 und DE 10 2009 012 140 sind Beispiele derartiger (Handhabungs-) Roboter bekannt, so dass der Inhalt dieser Veröffentlichungen der vorliegenden Beschreibung hinsichtlich des konstruktiven Aufbaus der (Handhabungs-) Roboter zuzurechnen ist.

Gemäß der Erfindung wird ferner ein Verfahren zur Handhabung von vorzugsweise zu beschichtenden Bauteilen bereitgestellt, durchgeführt mittels einer Vorrichtung und/oder einem Roboter wie oben beschrieben, wobei ein Erfassungselement formverändert und/oder volumenverändert wird, um das Bauteil zu erfassen, und das erfasste Bauteil gehandhabt wird.

Weitere Verfahrensschritte ergeben sich unmittelbar aus der oberen Beschreibung der Vorrichtung, insbesondere aus der Funktionalität der Vorrichtung.

Andere vorteilhafte Weiterbildungen der Erfindung sind in den Unteransprüchen offenbart oder ergeben sich aus der nachstehenden Beschreibung bevorzugter Ausführungsbeispiele in Verbindung mit den beigefügten Figuren. Es zeigen:
- Fig. 1: einen schematischen Längsschnitt einer Vorrichtung zur Handhabung von zu beschichtenden Bauteilen gemäß einer Ausführungsform der Erfindung;
- Fig. 2a: eine Draufsicht auf eine Lackierkabine, aufweisend zwei Handhabungs-Roboter mit jeweils einer Vorrichtung gemäß Fig. 1;
- Fig. 2b: eine Seitenansicht einer anderen Lackierkabine, aufweisend einen anderen HandhabungsRoboter mit einer Vorrichtung gemäß Fig. 1;
- Fig. 3: ein Flussdiagram eines Verfahrens zur Handhabung von zu beschichtenden Bauteilen gemäß einer Ausführungsform der Erfindung;
- Fig. 4: ein vereinfachtes Blockschaltbild einer Einrichtung zum Feststellen und/oder Ermitteln von Betriebs-Zuständen-/Vorgängen eines zu beschichtenden Bauteils und/oder einer Vorrichtung gemäß einer Ausführungsform der Erfindung; und
- Fig. 5a-5c: schematische Fluiddruck/Fluidvolumen-Kurven.

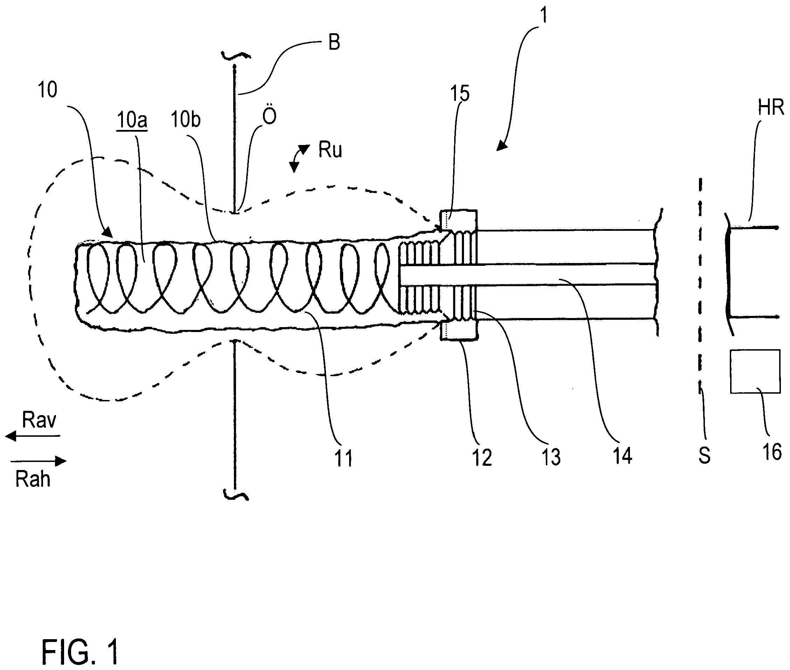

Fig. 1 zeigt einen schematischen Längsschnitt einer Vorrichtung 1 zur Handhabung von zu beschichtenden Bauteilen B gemäß einer Ausführungsform der Erfindung. Die Vorrichtung 1 ist vorgesehen zur Handhabung von zu beschichtenden Bauteilen B, wie z.B. Hauben, Türen, Klappen oder dergleichen von Kraftfahrzeugkarosserien. Insbesondere umfasst die Handhabung das Öffnen, Halten und/oder Schließen von Hauben, Klappen, Türen oder dergleichen von Kraftfahrzeugkarosserien. Die Handhabung des Bauteils B kann während und/oder vor und/oder nach einer Beschichtungsmittelapplikation auf das Bauteil B erfolgen.

Die Handhabungsvorrichtung 1 weist ein Erfassungselement bzw. Greifelement 10 auf, das volumenveränderbar und/oder formveränderbar ist, um einerseits das Bauteil B zu erfassen, wodurch das Bauteil B gehandhabt werden kann, und anderseits, um die Erfassung des Bauteils B zu lösen.

Das Erfassungselement 10 umfasst ein Volumen 10a und eine Form 10b. Das Erfassungselement 10 ist mittels einer durchgezogenen Linie in einem formverkleinerten und/oder volumenverkleinerten und/oder im Wesentlichen de-expandierten und/oder de-aufgeblähten und/oder entspannten und/oder schlaffen Zustand gezeigt (nachfolgend bezeichnet als "im Wesentlichen de-expandierter Zustand").

Das Erfassungselement 10 ist mittels einer gestrichelten Linie in einem formvergrößerten und/oder volumenvergrößerten und/oder expandierten und/oder aufgeblähten und/oder innendruckbeaufschlagten Zustand gezeigt (nachfolgend bezeichnet als "expandierter Zustand").

Das zu beschichtende Bauteil B umfasst einen Erfassungsabschnitt, in und/oder benachbart einer Öffnung Ö des Bauteils B. Im de-expandierten Zustand kann das Erfassungselement 10 in und/oder durch die Öffnung Ö geführt werden, um in, vor und hinter der Öffnung Ö in den expandierten Zustand zu gelangen, wodurch das Bauteil B erfasst und gehandhabt werden kann.

Nach der Handhabung kann das Erfassungselement 10 wieder den de-expandierten Zustand annehmen, wodurch die Erfassung gelöst werden kann und das Erfassungselement 10 aus der Öffnung Ö bzw. von dem Bauteil B entfernt werden kann.

Wie in Fig. 1 zu sehen, wird im expandierten Zustand das Erfassungselement 10 gegen die Innenkontur der Öffnung Ö gedrückt und passt sich dabei zumindest teilweise oder vollumfänglich an die Innenkontur der Öffnung Ö an, wodurch ein Kraftschluss und/oder ein Reibschluss ausgebildet wird. Da ferner das Erfassungselement 10 im expandierten Zustand hinter der Öffnung Ö so vergrößert ist, dass es nicht durch die Öffnung Ö passt, wird ferner ein gewisser Formschluss ausgebildet.

In Fig. 1 ist das Erfassungselement 10 in, teilweise vor und teilweise hinter der Öffnung Ö in einem expandierten Zustand gezeigt. Es ist jedoch auch möglich, dass ein Erfassungselement hinter einer Öffnung positioniert wird, um gänzlich hinter der Öffnung in einen expandierten Zustand zu gelangen. Bei dieser Ausführungsform hintergreift das Erfassungselement die Öffnung bzw. das zu beschichtende Bauteil, wodurch z.B. ein Formschluss ausgebildet werden kann.

Das Erfassungselement 10 wird durch Fluidzufuhr (Druckerhöhung) und/oder Fluidentfernung (Druckreduzierung) formverändert und/oder volumenverändert.

Zu diesem Zweck kann die Handhabungsvorrichtung 1 eine in Fig. 1 schematisch dargestellte Einrichtung 16 zum Zuführen und/oder Entfernen von Fluid umfassen oder eine Schnittstelle S, um mit einer solchen Einrichtung 16 verbunden werden zu können.

Die Einrichtung 16 kann z.B. eine fluidische Einrichtung mit zumindest einem Ventil und einer Fluiddruckquelle umfassen, womit nur ein Druck einstellbar und überwachbar wäre. Die Einrichtung 16 kann z.B. einen fluidischen Zylinder bzw. ein Dosierelement umfassen, welches ein vorbestimmtes Fluidvolumen in das Erfassungselement 10 fördern kann, was gesteuert bzw. geregelt und dadurch (indirekt) überwacht werden kann. Ferner ist es möglich, dass die Handhabungsvorrichtung 1 einen oder mehrere Drucksensoren umfasst, um etwaige Leckagen, Undichtheiten oder Beschädigungen der Handhabungsvorrichtung 1, insbesondere des Erfassungselements 10 zu detektieren.

Bei dem Fluid kann es sich vorzugsweise um Luft handeln, die insbesondere über einen Fluid-Zuführ/Abführ-Kanal 14, der in dem Erfassungselement 10 und/oder dem Volumen 10a mündet, zugeführt und abgeführt werden kann.

Dem Erfassungselement 10 wird das Fluid zugeführt, um das Erfassungselement 10 (bzw. das Volumen 10a und die Form 10b) zu vergrößern, wodurch eine Erfassung des Bauteils B erzielt werden kann. Wie in Fig. 1 zu sehen, vergrößert sich das Erfassungselement 10 durch axiale Verlängerung (siehe Pfeil Rav) und durch Umfangsvergrößerung (siehe Pfeil Ru) bzw. Vergrößerung in radialer Richtung.

Dem Erfassungselement 10 wird das Fluid entnommen, um das Erfassungselement 10 (bzw. das Volumen 10a und die Form 10b) zu verkleinern, wodurch die Erfassung des Bauteils B gelöst werden kann. Wie in Fig. 1 zu sehen, verkleinert sich das Erfassungselement 10 durch axiale Verkürzung (siehe Pfeil Rah) und durch Umfangsverkleinerung (siehe Pfeil Ru) bzw. Verkleinerung in radialer Richtung.

Wie in Fig. 1 ferner gesehen werden kann, ist das Erfassungselement 10 ein ballonartiges Erfassungselement, insbesondere ein ballonartiger Hohlkörper, der ballonartig formveränderbar und/oder volumenveränderbar ist, und der zumindest eine der folgenden Eigenschaften aufweist: dehnbar, nicht-dehnbar, flexibel, elastisch, nachgiebig, fluiddicht, aufblasbar, folienartig und membranartig.

Die Handhabungsvorrichtung 1 weist ferner ein Stützteil 11 auf, das das Erfassungselement 10 in einer Form hält, in der das Erfassungselement 10 in und/oder durch die Öffnung Ö geführt und aus der Öffnung Ö wieder herausgeführt werden kann.

Das Stützteil 11 ist in dem Erfassungselement 10 angeordnet und flexibel bzw. elastisch ausgebildet und insbesondere eine Feder.

Es ist aber auch möglich, dass das Erfassungselement 10 an sich ausreichend formstabil ist (insbesondere im im Wesentlichen de-expandierten Zustand), um in und/oder durch die Öffnung Ö geführt und aus der Öffnung Ö wieder herausgeführt werden zu können.

Ferner ist es möglich, dass das Erfassungselement 10 aus einem Werkstoff bzw. Material mit Memory-/Formgedächtnis-Effekt ausgebildet ist, wodurch das Erfassungselement 10 vorzugsweise ohne Druckbeaufschlagung in einer ausreichend stabilen Form gehalten werden kann bzw. vorteilhaft immer wieder in einen ausreichend stabilen Ausgangszustand zurückkehren kann.

Ferner kann das Erfassungselement 10 eine oder mehrere Kammern aufweisen, denen sequenziell und/oder parallel Fluid bzw. Druck zugeführt werden kann bzw. aus denen sequenziell und/oder parallel Fluid bzw. Druck entfernt werden kann.

Das Erfassungselement 10 und/oder das Stützteil 11 sind somit nicht starr oder steif, sondern nachgiebig ausgebildet, um einerseits ein sanftes, gleichmäßiges Erfassen des Bauteils B zu ermöglichen, wodurch auf vorteilhafte Weise die Gefahr einer Beschädigung des Bauteils B reduziert oder verhindert werden kann. Anderseits ermöglicht die nachgiebige Ausbildung, dass bei einem unbeabsichtigten Kontakt bzw. Anstoßen zwischen Erfassungselement 10 bzw. Stützteil und Bauteil B auf vorteilhafte Weise die Gefahr einer Beschädigung des Bauteils B, des Erfassungselement 10 und des das Erfassungselement 10 führenden Roboters/Manipulators HR (vorzugsweise ein Scara-Roboter oder ein Roboter mit bis zu 7 Freiheitsgraden) reduziert oder verhindert werden kann. Die Handhabungsvorrichtung 1 ist dabei über eine in Fig. 1 schematisch dargestellte Schnittstelle S mit dem Roboter HR verbunden.

Das Erfassungselement 10 umfasst ein Befestigungsmittel 12 zur Verbindung mit einer Befestigungsstruktur 13 an der Handhabungsvorrichtung 1. Das Befestigungsmittel 12 kann z.B. ein Kragen oder ein Bund mit einem Innengewinde sein, wobei die Befestigungsstruktur 13 ein passendes Außengewinde vorsehen kann. Bezugszeichen 15 zeigt eine Sollbruchstelle. Die Sollbruchstelle 15 ist beispielhaft an dem Befestigungsmittel 12 angeordnet und so gestaltet, dass sie bei Überbeanspruchung bricht, z.B. wenn das Bauteil B bei der Handhabung klemmt.

Das Befestigungsmittel 12 und/oder die Befestigungsstruktur 13 können auch als Rast-, Schnapp-, Klemm- oder Klett-Verbindung bereitgestellt werden. Dabei ist es möglich, die Verbindung zwischen Befestigungsmittel 12 und Befestigungsstruktur 13 so zu gestalten, dass die Verbindung bei Überbeanspruchung vorzugsweise ohne Beschädigung gelöst wird, z.B. wenn das Bauteil B bei der Handhabung klemmt, wodurch auf vorteilhafte Weise die Gefahr einer Beschädigung der Handhabungsvorrichtung 1, des die Handhabungsvorrichtung 1 führenden Roboters HR und/oder des Bauteils B reduziert oder verhindert werden kann.

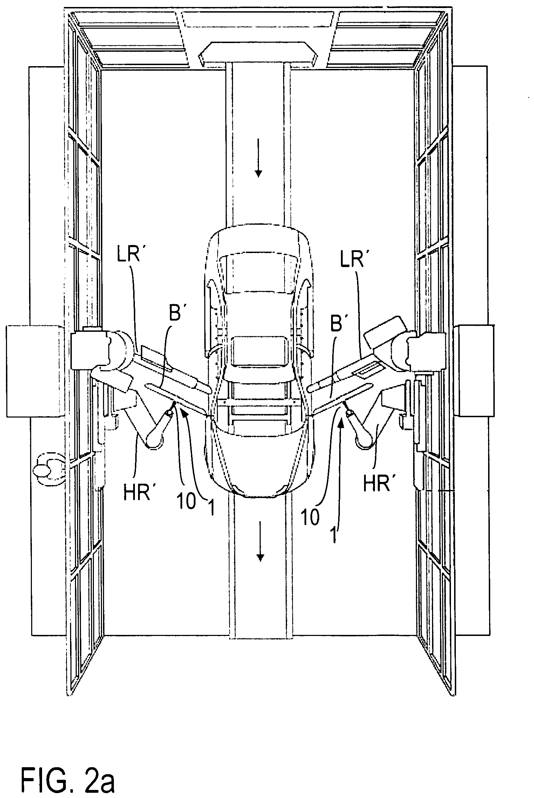

Fig. 2a zeigt eine Draufsicht auf eine Lackierkabine, aufweisend zwei Handhabungs-Roboter HR' mit jeweils einer Handhabungsvorrichtung 1 gemäß Fig. 1. Insbesondere sind zwei Erfassungselemente 10 zu sehen, die von jeweils einem Handhabungs-Roboter HR' geführt werden und die jeweils ein Bauteil B' in Form einer Kraftfahrzeugtüre erfassen und handhaben. Ferner sind zwei Lackierroboter LR' zu sehen, die ein Applikationselement zur Applikation eines Beschichtungsmittels führen.

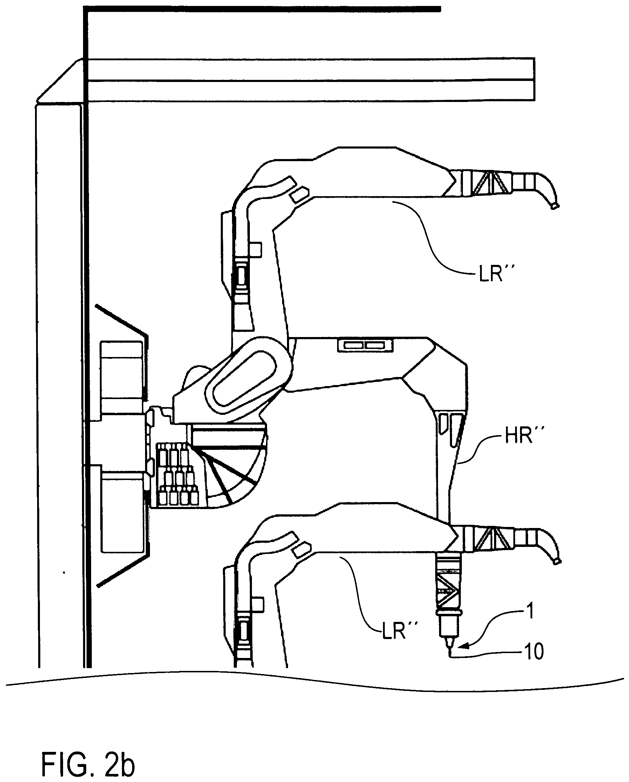

Fig. 2b zeigt einen Ausschnitt einer Seitenansicht einer anderen Lackierkabine, aufweisend einen anderen Handhabungs-Roboter HR" mit einer Handhabungsvorrichtung 1 gemäß Fig. 1. Insbesondere ist ein Erfassungselement 10 zu sehen, das von dem Handhabungs-Roboter HR" geführt wird, um ein Bauteil (in Fig. 2b nicht gezeigt) zu erfassen und zu handhaben. Ferner sind zwei Lackierroboter LR" zu sehen, die jeweils ein Applikationselement zur Applikation eines Beschichtungsmittels führen.

Es ist auch möglich, die Handhabungsvorrichtung 1 an einem Lackierroboter anzubringen, der dann auch als Handhabungsroboter tätig wird.

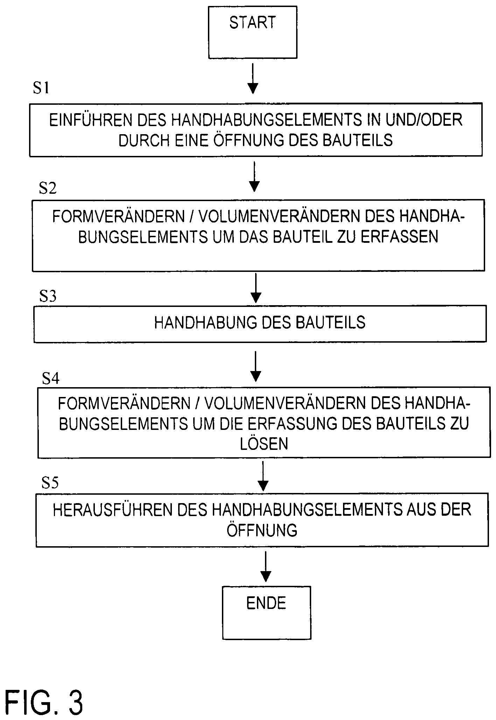

Fig. 3 zeigt ein Flussdiagram eines Verfahrens zur Handhabung von zu beschichtenden Bauteilen gemäß einer Ausführungsform der Erfindung.

In einem ersten Schritt S1 wird ein Erfassungselement 10 in und/oder durch eine Öffnung Ö in einem Bauteil B geführt, während sich das Erfassungselement 10 in einem im Wesentlichen de-expandierten Zustand befindet.

In einem zweiten Schritt S2 wird das Erfassungselement 10 durch Fluidzufuhr formverändert und/oder volumenverändert, insbesondere in einen expandierten Zustand gebracht, um das Bauteil B zu erfassen. Ferner kann eine Prüfung durchgeführt werden, ob das Bauteil B von dem Erfassungselement 10 erfasst ist oder nicht.

In einem dritten Schritt S3 wird das von dem Erfassungselement 10 erfasste Bauteil B gehandhabt. Wenn das Bauteil B eine Haube, Klappe oder Türe einer Kraftfahrzeugkarosserie ist, umfasst das Handhaben insbesondere das Öffnen, Halten und Schließen der Haube, Türe oder Klappe. Ferner kann eine Kraft- bzw. Momentenüberwachung bei der Handhabung, insbesondere bei der Bewegung durchgeführt werden, z.B. um Beschädigungen zu verhindern.

Nach erfolgter Handhabung wird das Erfassungselement 10 in einem vierten Schritt S4 durch Fluidentfernung (z.B. Fluidentzug bzw. Ablassen von Fluid) erneut formverändert und/oder volumenverändert, insbesondere in einen im Wesentlichen de-expandierten Zustand gebracht, um die Erfassung des Bauteils B zu lösen.

Wenn das Erfassungselement 10 in dem im Wesentlichen de-expandierten Zustand ist und die Erfassung zwischen Erfassungselement 10 und Bauteil B gelöst ist, wird das Erfassungselement 10 in einem fünften Schritt S5 wieder aus der Öffnung Ö heraus geführt und von dem Bauteil B entfernt. Nachdem Schritt S5 ausgeführt worden ist, kann die Handhabung eines anderen Bauteils durchgeführt werden.

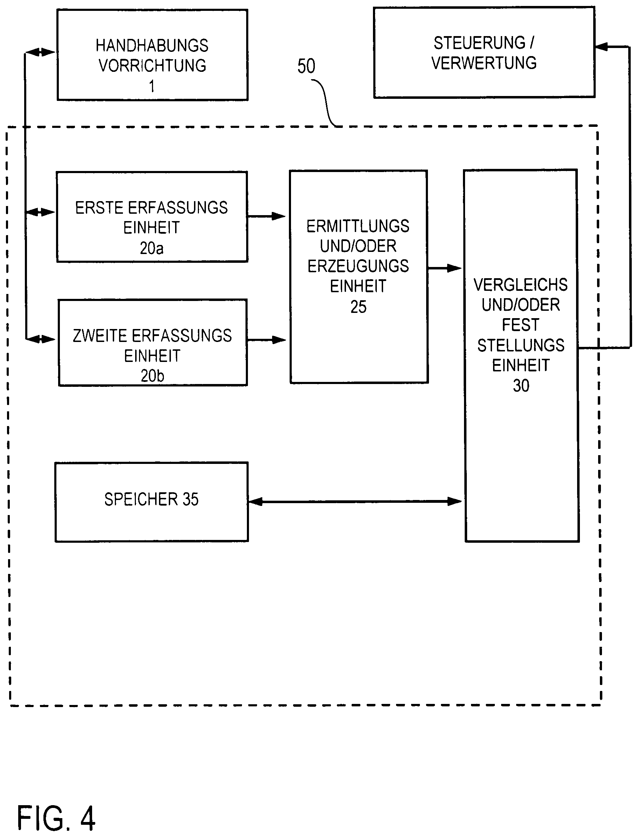

Fig. 4 zeigt ein vereinfachtes, schematisches Blockschaltbild einer Einrichtung 50 für eine Handhabungsvorrichtung 1 gemäß einer Ausführungsform der Erfindung zum Feststellen und/oder Ermitteln verschiedener Betriebszustände der Handhabungsvorrichtung 1, insbesondere des Erfassungselements 10, und/oder des Bauteils B, um Fehlerfassungen oder ein Nicht-Vorhandensein eines Bauteils B festzustellen bzw. zu ermitteln.

Die Einrichtung 50 kann z.B. mit einem Computer, einer Recheneinheit, einem Speicher, einer Steuerung, einer CPU (Prozessor), etc. verbunden sein oder einige oder alle dieser Komponenten umfassen.

Die Einrichtung 50 weist eine erste Erfassungseinheit 20a auf zum Erfassen des Fluiddrucks, mit dem das Erfassungselement 10 beaufschlagt wird.

Die Einrichtung 50 weist eine zweite Erfassungseinheit 20b auf zum Erfassen des Fluidvolumens, mit dem das Erfassungselement 10 beaufschlagt wird.

Hierbei sind insbesondere die zwei folgenden Prinzipien denkbar.

Erstens: Füllen und während des Vorgangs den Volumenstrom ermitteln, um das Volumen über die Zeit einzustellen.

Zweitens: Vorbestimmtes (erforderliches bzw. konstantes) Volumen befindet sich in einem Dosierorgan, das vorgesehen ist, um sein Volumen dem Erfassungselement 10 bereitzustellen. Dabei ist keine Volumenstrommessung notwendig, sondern lediglich eine Druckerfassung (z.B. zur Fehlerdetektion), weshalb die zweite Erfassungseinheit 20b auch weggelassen werden könnte.

Wie in Fig. 4 gesehen werden kann, ist eine Ermittlungs- und/oder Erzeugungseinheit 25 vorgesehen, um die (durch die erste Erfassungseinheit 20a und die zweite Erfassungseinheit 20b) erfassten und/oder die dem Erfassungselement 10 beaufschlagten Fluiddrücke und Fluidvolumina zu verwerten.

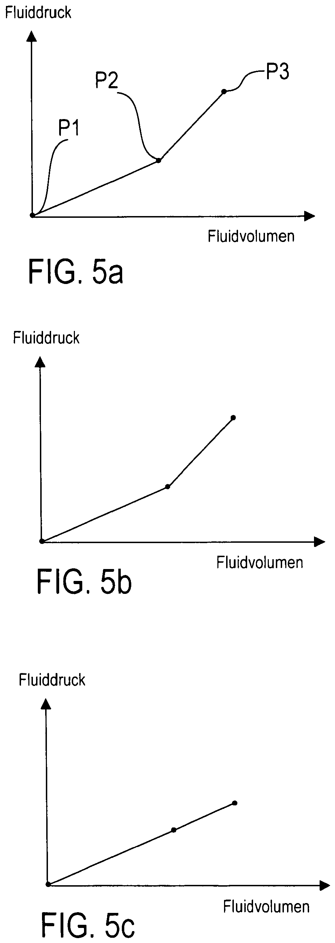

Die Ermittlungs- und/oder Erzeugungseinheit 25 ist vorgesehen, um zumindest eine Fluiddruck/Fluidvolumen-Kurve basierend auf den Fluiddrücken und den Fluidvolumina, die von der ersten und/oder der zweiten Erfassungseinheit 20a, 20b erfasst werden und/oder mit denen das Erfassungselement 10 beaufschlagt wird, zu ermitteln und/oder zu erzeugen (siehe z.B. Figuren 5b, 5c).

Die Ermittlungs- und/oder Erzeugungseinheit 25 wiederum kommuniziert die ermittelte und/oder erzeugte Fluiddruck/Fluidvolumen-Kurve an eine Vergleichs- und/oder Feststellungseinheit 30. Die Vergleichs- und/oder Feststellungseinheit 30 vergleicht zumindest eine ermittelte und/oder erzeugte Fluiddruck/Fluidvolumen-Kurve mit zumindest einer in einem Speicher 35 gespeicherten Referenz-Fluiddruck/Fluidvolumen-Kurve (siehe z.B. Fig. 5a).

Durch einen Vergleich einer ermittelten und/oder erzeugten Fluiddruck-/Fluidvolumen-Kurve mit einer gespeicherten Referenz-Fluiddruck/Fluidvolumen-Kurve können verschiedene Betriebszustände (z.B. ein ordnungsgemäßes Erfassen, ein fehlerhaftes Erfassen oder gar kein Erfassen eines Bauteils B) festgestellt bzw. ermittelt werden.

Die gespeicherten Referenz-Fluiddruck/Fluidvolumen-Kurven können z.B. ordnungsgemäße Zustände oder Vorgänge beschreiben oder typische fehlerhafte Zustände oder Vorgänge.

Entspricht die ermittelte und/oder erzeugte Fluiddruck/Fluidvolumen-Kurve nicht einer gespeicherten Referenz-Fluiddruck/Fluidvolumen-Kurve, die einen ordnungsgemäßen Vorgang oder Zustand beschreibt, so kann die Feststellung getroffen werden, dass allgemein ein fehlerhafter Zustand oder Vorgang vorliegt.

Entspricht die ermittelte und/oder erzeugte Fluiddruck/Fluidvolumen-Kurve im Wesentlichen einer gespeicherten Referenz-Fluiddruck/Fluidvolumen-Kurve, kann die Feststellung getroffen werden, dass ein bestimmter ordnungsgemäßer Vorgang oder Zustand vorliegt oder dass ein bestimmter fehlerhafter Zustand oder Vorgang vorliegt.

Die von der Vergleichs- und/oder Feststellungseinheit 30 ermittelten und/oder festgestellten Ergebnisse können z.B. an eine Steuerung (z.B. eine Steuerung für den Handhabungsroboter HR, die Handhabungsvorrichtung 1, einen Lackierroboter oder andere von der Handhabung abhängigen Komponenten einer Lackieranlage) zur weiteren Verwertung und Verarbeitung kommuniziert werden.

Die erste Erfassungseinheit 20a, die zweite Erfassungseinheit 20b, die Ermittlungs- und/oder Erzeugungseinheit 25, sowie die Vergleichs- und/oder Feststellungseinheit 30 sind als separate Einheiten dargestellt. Es ist aber auch möglich, separat dargestellte Einheiten in einer Einheit zusammenzufassen (z.B. die erste und zweite Erfassungseinheit 20a, 20b zu einer Einheit zusammenzufassen, die Ermittlungs- und/oder Erzeugungseinheit 25 und die Vergleichs- und/oder Feststellungseinheit 30 zu einer Einheit zusammenzufassen, etc.). Figur 5a zeigt beispielhaft eine gespeicherte Referenz-Fluiddruck/Fluidvolumen-Kurve, die eine ordnungsgemäße Erfassung zwischen Erfassungselement 10 und Bauteil B repräsentiert.

Punkt P1 kennzeichnet den Beginn der Beaufschlagung des Erfassungselements 10 mit Fluid/Druck.

Der Bereich zwischen Punkt P1 und P2 kennzeichnet einen Zustand oder Vorgang, bei dem das Erfassungselement 10 expandiert, jedoch das Bauteil B noch nicht erfasst wird.

Punkt P2 kennzeichnet den Beginn der Erfassung zwischen Erfassungselement 10 und Bauteil B.

Der Bereich zwischen Punkt P2 und P3 kennzeichnet einen Zustand oder Vorgang, bei dem das Erfassungselement 10 expandiert und das Bauteil B erfasst ist.

Punkt P3 kennzeichnet einen Zustand oder Vorgang, bei dem Erfassungselement 10 kein weiteres Fluid/Druck zugeführt wird, das Bauteil B erfasst ist und somit gehandhabt werden kann.

Die Figuren 5b, 5c zeigen beispielhafte von der Ermittlungs- und/oder Erzeugungseinheit 25 ermittelte und/oder erzeugte Fluiddruck/Fluidvolumen-Kurven, repräsentierend eine vorliegende Beaufschlagung des Erfassungselements 10 mit Fluiddruck/Fluidvolumen. Fig. 5b zeigt beispielhaft eine Fluiddruck/Fluidvolumen-Kurve, bei der das Erfassungselement 10 ordnungsgemäß ein Bauteil B erfasst, wobei Fig. 5c beispielhaft eine Fluiddruck/Fluidvolumen-Kurve zeigt, bei der das Erfassungselement 10 ein Bauteil B nicht erfasst bzw. kein Bauteil B präsent ist.

Die gespeicherte Referenz-Fluiddruck/Fluidvolumen-Kurve gemäß Fig. 5a entspricht im Wesentlichen der Fluiddruck/Fluidvolumen-Kurve gemäß 5b, so dass nach einem Vergleich der Kurven die Feststellung getroffen werden kann, dass eine ordnungsgemäße Erfassung zwischen Erfassungselement 10 und Bauteil B vorliegt.

Die gespeicherte Referenz-Fluiddruck/Fluidvolumen-Kurve gemäß Fig. 5a entspricht jedoch nicht der Fluiddruck/Fluidvolumen-Kurve gemäß Fig. 5c, (insbesondere erfolgt bei Punkt P2 kein Knick, weil kein Bauteil B erfasst worden ist), so dass nach einem Vergleich der Kurven die Feststellung getroffen werden kann, dass keine Erfassung zwischen Erfassungselement 10 und Bauteil B vorliegt bzw. kein Bauteil B präsent ist.

### Bezugszeichenliste

- 1: Vorrichtung zur Handhabung von zu beschichtenden Bauteilen (Handhabungsvorrichtung)
- 10: Erfassungselement
- 10a: Volumen des Erfassungselements
- 10b: Form des Erfassungselements
- 11: Stützteil
- 12: Befestigungsmittel
- 13: Befestigungsstruktur
- 14: Fluid-Zuführ/Abführ-Kanal
- 15: Sollbruchstelle
- 16: Einrichtung zur Fluidzufuhr und/oder zur Fluidentfernung
- 20a: erste Erfassungseinheit
- 20b: zweite Erfassungseinheit
- 25: Ermittlungs- und/oder Erzeugungseinheit
- 30: Vergleichs- und/oder Feststellungseinheit
- 35: Speicher
- B: Bauteil
- Ö: Öffnung/Erfassungsstruktur
- HR: Handhabungsroboter
- LR: Lackierroboter
- S: Schnittstelle(n) für Vorrichtung und Roboter und/oder für Vorrichtung und Einrichtung zur Fluidzufuhr und/oder zur Fluidentfernung

## Patentansprüche

1. Vorrichtung zur Handhabung von vorzugsweise zu beschichtenden Bauteilen (B), nämlich Hauben, Klappen, Türen oder dergleichen von Kraftfahrzeugkarosserien oder anderen Fahrzeugen, mit einem Erfassungselement (10), das durch Fluidbeaufschlagung volumenveränderbar und/oder formveränderbar ist, um das Bauteil (B) zu erfassen, wodurch das Bauteil (B) gehandhabt werden kann, und mit einer Überwachungseinrichtung (50) zum Überwachen, ob das Bauteil (B) von dem Erfassungselement (10) erfasst wird oder nicht, wobei das Erfassungselement (10) durch Fluidzufuhr und/oder Fluidentfernung formveränderbar und/oder volumenveränderbar ist und vorgesehen ist, um sich der Innenkontur einer Öffnung (Ö) in dem Bauteil (B) zumindest abschnittsweise anzupassen,
wobei die Überwachungseinrichtung (50) umfasst:
a) eine erste Erfassungseinheit (20a), um zumindest einen Fluiddruck, mit dem das Erfassungselement (10) beaufschlagt wird, zu erfassen;
b) eine zweite Erfassungseinheit (20b), um zumindest ein Fluidvolumen, mit dem das Erfassungselement (10) beaufschlagt wird, zu erfassen;
c) eine Ermittlungseinheit (25), um zumindest eine Fluiddruck/Fluidvolumen-Kurve basierend auf dem zumindest einen Fluiddruck und dem zumindest einen Fluidvolumen, mit denen das Erfassungselement (10) beaufschlagt wird, zu ermitteln,
d) und eine Vergleichseinheit (30), um die zumindest eine ermittelte Fluiddruck/Fluidvolumen-Kurve mit zumindest einer Referenz-Fluiddruck/Fluidvolumen-Kurve zu vergleichen.

2. Vorrichtung gemäß Anspruch 1, wobei das Erfassungselement (10) vorgesehen ist, um in einem expandierten Zustand gegen das Bauteil (B) gedrückt zu werden; und um in einem de-expandierten Zustand die Druckbeaufschlagung auf das Bauteil (B) zu lösen.

3. Vorrichtung gemäß einem der Ansprüche 1-2, wobei das Erfassungselement (10) zumindest eines von Folgenden ist:
a) lösemittelbeständig und lackverträglich;
b) memoryeffektbehaftet.

4. Vorrichtung gemäß einem der Ansprüche 1-3, umfassend ein Stützteil (11), um das Erfassungselement (10) in einer Ausrichtung zu halten, wodurch das Erfassungselement (10) zielgenau positioniert werden kann.

5. Vorrichtung gemäß einem der Ansprüche 1-4, wobei das Erfassungselement (10) einen Memory-Effekt aufweist, um das Erfassungselement (10) in einer Ausrichtung zu halten, wodurch das Erfassungselement (10) zielgenau positioniert werden kann.

6. Vorrichtung gemäß Anspruch 4, wobei das Stützteil (11)
a) in dem Erfassungselement (10) angeordnet ist; und
b) elastisch ausgebildet ist.

7. Vorrichtung gemäß einem der Ansprüche 1-6,
umfassend eine Sollbruchstelle, die bei Überbeanspruchung bricht, wenn das Bauteil (B) bei der Handhabung klemmt.

8. Vorrichtung gemäß einem der Ansprüche 1-7,
wobei das Erfassungselement (10) ein Befestigungsmittel (12) zur Verbindung mit einer Befestigungsstruktur (13) der Vorrichtung umfasst, wobei sich die Verbindung bei Überbeanspruchung löst, wenn das Bauteil (B) bei der Handhabung klemmt.

9. Vorrichtung gemäß einem der Ansprüche 1-8,
wobei das Erfassungselement (10) bei Überbeanspruchung reißt, wenn das Bauteil (B) bei der Handhabung klemmt.

10. Vorrichtung gemäß einem der Ansprüche 1-9, umfassend eine Einrichtung (50) zum Überwachen der Kraft, des Drucks und/oder der Spannung, mit der das Erfassungselement (10) ein Bauteil (B) erfasst.

11. Vorrichtung gemäß einem der Ansprüche 1-10, wobei die Überwachungseinrichtung (50) basierend auf dem Fluiddruck und dem Fluidvolumen, mit denen das Erfassungselement (10) beaufschlagt wird, die Überwachung durchführt.

12. Roboter, vorzugsweise Scara-Roboter oder Roboter mit bis zu 7 Freiheitsgraden, umfassend eine Vorrichtung gemäß einem der Ansprüche 1-11.

13. Verfahren zur Handhabung von vorzugsweise zu beschichtenden Bauteilen (B), nämlich Hauben, Klappen, Türen oder dergleichen von Kraftfahrzeugkarosserien oder anderen Fahrzeugen, ausgeführt mit einer Vorrichtung gemäß einem der Ansprüche 1-11 oder einem Roboter gemäß Anspruch 12, wobei ein Erfassungselement (10) durch Fluidbeaufschlagung formverändert und/oder volumenverändert wird, um ein Bauteil (B) zu erfassen und zu handhaben und mittels einer Überwachungseinrichtung (50) überwacht wird, ob das Bauteil (B) von dem Erfassungselement (10) erfasst wird oder nicht.

14. Verfahren gemäß 13, wobei
das Erfassungselement (10) durch Fluidzufuhr und/oder Fluidentfernung formverändert und/oder volumenverändert wird.

15. Verfahren gemäß einem der Ansprüche 13-14, wobei das Erfassungselement (10) in einem expandierten Zustand gegen die Innenkontur der Öffnung (Ö) des Bauteils (B) gedrückt wird; und in einem de-expandierten Zustand die Druckbeaufschlagung auf die Innenkontur der Öffnung (Ö) des Bauteils (B) löst.

16. Verfahren gemäß einem der Ansprüche 13-15, wobei das Erfassungselement (10) sich der Innenkontur einer Öffnung (Ö) des Bauteils (B) zumindest abschnittsweise anpasst.

17. Verfahren gemäß einem der Ansprüche 13-16, umfassend den Schritt des Überwachens der Kraft, des Drucks und/oder der Spannung, mit der das Erfassungselement (10) ein Bauteil (B) erfasst.

18. Verfahren gemäß einem der Ansprüche 13-16, **gekennzeichnet durch** Verwendung eines ballonartigen Erfassungselements (10) zur Erfassung und Handhabung von Türen, Klappen, Hauben oder dergleichen von Kraftfahrzeugkarosserien.

## Claims

1. A device for handling components (B) preferably to be coated, namely hoods, flaps, doors or the like of motor vehicle bodies or other vehicles, comprising a grasping element (10), which can be changed by fluid effect, in terms of volume and/or in terms of shape, in order to grasp the component (B), as a result of which the component (B) can be handled, and a monitoring apparatus (50) for monitoring whether or not the component (B) is grasped by the grasping element (10), wherein the grasping element (10) can be changed in terms of shape and/or in terms of volume by means of fluid supply and/or fluid removal, and is provided in order to adapt to the internal contour of an opening (Ö) in the component (B) at least in sections,
wherein the monitoring apparatus (50) comprises:
a) a first detection unit (20a), in order to detect at least one fluid pressure with which the grasping element (10) is loaded;
b) a second detection unit (20b), in order to detect at least one fluid volume with which the grasping element (10) is loaded;
c) a determination unit (25), in order to determine at least one fluid pressure/fluid volume curve based on the at least one fluid pressure and the at least one fluid volume with which the grasping element (10) is loaded;
d) and a comparison unit (30) in order to compare the at least one determined fluid pressure/fluid volume curve with at least one reference fluid pressure/fluid volume curve.

2. The device according to claim 1, wherein the grasping element (10) is provided in order to be pressed against the component (B) in an expanded state; and in order to release the pressure effect on the component (B) in a de-expanded state.

3. The device according to any one of claims 1 - 2, wherein the grasping element is at least one of the following:
a) solvent-resistant and paint-tolerant;
b) subject to memory effect.

4. The device according to any one of claims 1 - 3, comprising a support part (11), in order to keep the grasping element (10) in an orientation, as a result of which the grasping element (10) can be positioned in a pinpointed manner.

5. The device according to any one of claims 1 - 4, wherein the grasping element (10) has a memory effect, in order to keep the grasping element (10) in an orientation, as a result of which the grasping element (10) can be positioned in a pinpointed manner.

6. The device according to claim 4, wherein the support part (11)
a) is arranged in the grasping element (10); and
b) is formed resiliently.

7. The device according to any one of claims 1 - 6, comprising a predetermined breaking point, which breaks in the case of overloading if the component (B) jams during handling.

8. The device according to any one of claims 1 - 7, wherein the grasping element (10) comprises a fastening means (12) for connecting to a fastening structure (13) of the device, wherein the connection is released in the case of overloading if the component (B) jams during handling.

9. The device according to any one of claims 1 - 8, wherein the grasping element (10) tears in the case of overloading if the component (B) jams during handling.

10. The device according to any one of claims 1 - 9, comprising an apparatus (50) for monitoring the force, the pressure and/or stress with which the grasping element (10) grasps a component (B).

11. The device according to any one of claims 1 - 10, wherein the monitoring apparatus (50) performs the monitoring on the basis of the fluid pressure and fluid volume with which the grasping element (10) is effected.

12. A robot, preferably a SCARA robot or robot with up to 7 degrees of freedom, comprising a device according to any one of claims 1 - 11.

13. A method for handling components (B) preferably to be coated, namely hoods, flaps, doors or the like of motor vehicle bodies or other vehicles, executed with a device according to any one of claims 1 - 11 or a robot according to claim 12, wherein a grasping element (10) is changed by fluid effect in terms of shape and/or in terms of volume, in order to grasp and handle a component (B), and a monitoring apparatus (50) is used for monitoring whether or not the component (B) is grasped by the grasping element (10).

14. The method according to claim 13, wherein
the grasping element (10) is changed in terms of shape and/or in terms of volume by means of fluid supply and/or fluid removal.

15. The method according to any one of claims 13 - 14, wherein the grasping element (10) in an expanded state is pressed against the internal contour of the opening (Ö) of the component (B); and in a de-expanded state releases the pressure loading onto the internal contour of the opening (Ö) of the component (B).

16. The method according to any one of claims 13 - 15, wherein the grasping element (10) adapts to the internal contour of an opening (Ö) of the component (B) at least in sections.

17. The method according to any one of claims 13 - 16, comprising the step of monitoring the force, the pressure and/or stress with which the grasping element (10) grasps a component (B).

18. The method according to any one of claims 13 - 16, **characterised by** use of a balloon-like grasping element (10) for grasping and handling doors, flaps, hoods or the like of motor vehicle bodies.

## Revendications

1. Dispositif de manipulation de composants (B), de préférence à revêtir, à savoir des capots, des clapets, des portières ou autres de carrosseries de véhicules automobiles ou d'autres véhicules, avec un élément de préhension (10), dont le volume et/ou la forme peut être modifiée par l'action d'un fluide, afin de saisir le composant (B), ce qui permet de manipuler le composant (B), et avec un dispositif de surveillance (50) pour surveiller si le composant (B) est saisi par l'élément de préhension (10) ou non, dans lequel la forme et/ou le volume de l'élément de préhension (10) peut être modifié par l'introduction d'un fluide et/ou le retrait d'un fluide, afin de s'adapter au moins partiellement au contour interne d'une ouverture (Ö) dans le composant (B), dans lequel le dispositif de surveillance (50) comprend :
a) une première unité de mesure (20a), afin de mesurer au moins une pression de fluide avec laquelle l'élément de préhension (10) est sollicité ;
b) une deuxième unité de mesure (20b), afin de mesurer au moins un volume de fluide avec lequel l'élément de préhension (10) est sollicité ;
c) une unité de détermination (25), afin de déterminer au moins une courbe de pression de fluide/volume de fluide sur la base de l'au moins une pression de fluide et de l'au moins un volume de fluide avec lesquels l'élément de préhension (10) est solllicité,
d) et une unité de comparaison (30), afin de comparer l'au moins une courbe de pression de fluide/volume de fluide avec au moins une courbe de pression de fluide/volume de fluide de référence.

2. Dispositif selon la revendication 1, dans lequel l'élément de préhension (10) est conçu pour être comprimé, dans un état dilaté, contre le composant (B) ; et afin de relâcher, dans un état détendu, la sollicitation de pression sur le composant (B).

3. Dispositif selon l'une des revendications 1 à 2, dans lequel l'élément de préhension (10) présente au moins une des propriétés suivantes :
a) résistant aux solvants et compatible avec les peintures ;
b) présente un effet mémoire.

4. Dispositif selon l'une des revendications 1 à 3, comprenant une partie d'appui (11) afin de maintenir l'élément de préhension (10) dans une orientation, ce qui permet de positionner l'élément de préhension (10) de manière précise.

5. Dispositif selon l'une des revendications 1 à 4, dans lequel l'élément de préhension (10) présente un effet mémoire afin de maintenir l'élément de préhension (10) dans une orientation, ce qui permet de positionner l'élément de préhension (10) de manière précise.

6. Dispositif selon la revendication 4, dans lequel la partie d'appui (11)
a) est disposée dans l'élément de préhension (10) ; et
b) est élastique.

7. Dispositif selon l'une des revendications 1 à 6,
comprenant un point de rupture prédéterminé qui se casse lors d'une sollicitation excessive si le composant (B) se coince lors de la manipulation.

8. Dispositif selon l'une des revendications 1 à 7,
dans lequel l'élément de préhension (10) comprend un moyen de fixation (12) pour une liaison avec une structure de fixation (13) du dispositif, dans lequel la liaison se détache lors d'une sollicitation excessive lorsque le composant (b) se coince lors de la manipulation.

9. Dispositif selon l'une des revendications 1 à 8,
dans lequel l'élément de préhension (10) se déchire lors d'une sollicitation excessive lorsque le composant (B) se coince lors de la manipulation.

10. Dispositif selon l'une des revendications 1 à 9, comprenant un dispositif (50) pour la surveillance de la force, de la pression et/ou du serrage avec lequel l'élément de préhension (10) mesure un composant (B).

11. Dispositif selon l'une des revendications 1 à 10, dans lequel le dispositif de surveillance (50) effectue la surveillance sur la base de la pression du fluide et du volume du fluide avec lesquels l'élément de préhension (10) est sollicité.

12. Robot, de préférence robot Scara ou robot avec jusqu'à 7 degrés de liberté, comprenant un dispositif selon l'une des revendications 1 à 11.

13. Procédé pour la manipulation de composants (B), de préférence à revêtir, à savoir des capots, des clapets, des portières ou autres de carrosseries de véhicules automobiles ou d'autres véhicules, exécuté avec un dispositif selon l'une des revendications 1 à 11 ou robot selon la revendication 12, dans lequel la forme et/ou le volume d'un élément de préhension (10) peut être modifié grâce à la sollicitation par un fluide, afin de sairi et de manipuler un composant (B) et, au moyen d'un dispositif de surveillance (50), il est surveillé si le composant (B) est saisi par l'élément de préhension (10) ou non.

14. Procédé selon la revendication 13, dans lequel
la forme et/ou el volume de l'élément de préhension (10) peut être modifé par introduction d'un fluide et/ou le retrait d'un fluide.

15. Procédé selon l'une des revendications 13 à 14, dans lequel l'élément de préhension (10) est comprimé, dans un état dilaté, contre le contour interne de l'ouverture (Ö) du composant (B) ;
et, dans un état non dilaté, la sollicitation de pression sur le contour interne de l'ouverture (Ö) du composant (B) se relâche.

16. Procédé selon l'une des revendications 13 à 15, dans lequel l'élément de préhension (10) s'adpate au moins partiellement au contour interne d'une ouverture (Ö) du composant (B).

17. Procédé selon l'une des revendications 13 à 16, comprenant l'étape de la surveillance de la force, de la pression et/ou du serrage avec lequel l'élément de préhension (10) saisit un composant (B).

18. Procédé selon l'une des revendications 13 à 16, **caractérisé par** l'utilisation d'un élément de préhension (10) en forme de ballon pour la préhension et la manipulation de portières, de clapets, de capots ou autres de carrosseries de véhicules automobiles.
